# EUROPEAN PATENT SPECIFICATION

(11) **EP 0 409 468 B1**
(45) Date of publication and mention of the grant of the patent: **13.09.1995**
(21) Application number: 90307524.0
(22) Date of filing: 10.07.1990
(51) Int. Cl.: G11B 7/12, G11B 7/08, G11B 7/085, G11B 7/125

(54) **Flying optical head**
Fliegender optischer Kopf
Tête optique volante

(30) Priority: 19.07.1989 JP 186436/89; 19.07.1989 JP 186444/89; 24.07.1989 JP 190999/89
(43) Date of publication of application: 23.01.1991
(73) Proprietor: MATSUSHITA ELECTRIC INDUSTRIAL CO., LTD., Kadoma-shi, Osaka-fu, 571 (JP)
(72) Inventor: Satoh, Isao, Neyagawa-shi (JP); Mizuno, Sadao, Ibaraki-shi (JP); Yamada, Noboru, Hirakata-shi (JP); Gotoh, Yasuhiro, Kadoma-shi (JP)
(74) Representative: Votier, Sidney David

(56) References cited:
- EP-A- 0 341 820
- WO-A-84/00243
- DE-A- 3 828 145
- US-A- 3 941 927
- US-A- 4 003 059
- US-A- 4 843 502
- PATENT ABSTRACTS OF JAPAN, vol. 9, no. 170 (P-373)(1893), 16th July 1985;& JP-A-60 47 244
- 35TH SPRING MEETING: JAPAN APPLIED PHYSICS AND RELATED SOCIETIES, no. 3, 1988,page 863; "Lecture no. 29a-ZP-7: Beam waist positionvariable diode laser integrated with carrier injectiontype lens"
- PATENT ABSTRACTS OF JAPAN, vol. 13, no. 222 (P-876)(3570), 24th May 1989;& JP-A-1 35 734
- PATENT ABSTRACTS OF JAPAN, vol. 9, no. 83 (P-348)(1806), 12th April 1985; & JP-A-59 213036
- PATENT ABSTRACTS OF JAPAN, vol. 11, no. 170 (P-581), 2nd June 1985;& JP-A-62 001 131

## Description

This invention relates to an optical head for recording and reproducing information on and from an optical disk and relates also to an optical information recording and reproducing apparatus. More particularly, this invention relates to a flying optical head recording and reproducing an information signal with a laser beam on and from an optical disk while flying on the optical disk, and relates also to an optical recording and reproducing apparatus using such an optical head for the information signal recording and reproduction.

An optical recording and reproducing apparatus using an optical disk as a recording medium is advantageout in the aspect of recording density over a magnetic recording and reproducing apparatus. However, the former is not still sufficient in the aspect of access speed as compared with that of the latter. This is attributable to the difference between the mass of the optical and magnetic recording and reproducing heads used for recording and reproducing a signal. That is, the optical head is large in size heavy in weight, whereas the magnetic head is very small in size and light in weight. An optical head of a split-type has been proposed so as to solve the above problem. Also, when an optical disk is compared with a magnetic recording medium such as a magnetic disk in view of the surface recording density, the surface recording density of the optical disk, because of its superiority in track density, is about several to ten times as high as that of the magnetic disk. However, when both are compared with each other from the viewpoint of drive units, their memory capacities are almost in the same level. This is because the magnetic head is very small in size, and a stacked structure can be easily obtained by stacking a plurality of magnetic disks. Therefore, in order to increase the memory capacity of the optical disk, it is important to attain an improvement in the surface recording density of the optical disk and a reduction in the size of the optical head so as to achieve the desired stacking of a plurality of optical disks.

The surface recording density D of an optical disk on which information is recorded with a laser beam is expressed as D ∝ (NA/λ)², where λ is the wavelength of the laser beam and NA is the numerical aperture of an objective lens. Therefore, the desired increase in the surface recording density D is attained by two ways of approach, that is, shortening the wavelength λ of the laser beam and increasing the numerical aperture NA of the objective lens.

Shortening the wavelength λ of the laser beam is dependent on the progress of the semiconductor laser diode technology. At present, urgent development of a semiconductor laser diode capable of emitting a laser beam having a wavelength of 670 nm is demanded. As for crystalline materials capable of emitting a laser beam having a wavelength shorter than 670 nm, practically usable materials have not been found yet, and it is the present status that the above demand is dealt with by increasing the numerical aperture NA of the objective lens.

However, in the case of the optical disk structure where the laser beam is directed to irradiate the recording layer through the disk substrate thereby recording and reproducing a signal on and from the optical disk, the objective lens has a long working distance WD, and the increase in the numerical aperture NA of the objective lens leads directly to a large size of the objective lens, resulting in impossibility of attaining the desired reduction in the size of the optical head. Also, because the amount of vertical runout of the optical disk is commonly about 100 µm, and a lens actuator having a wide movable range is required for actuating the objective lens, these factors have obstructed the desired reduction in the size of the optical head.

A prior art optical head according to the preamble of appended claim 1 is disclosed in, for example, JP-A-64-35734 (1989).

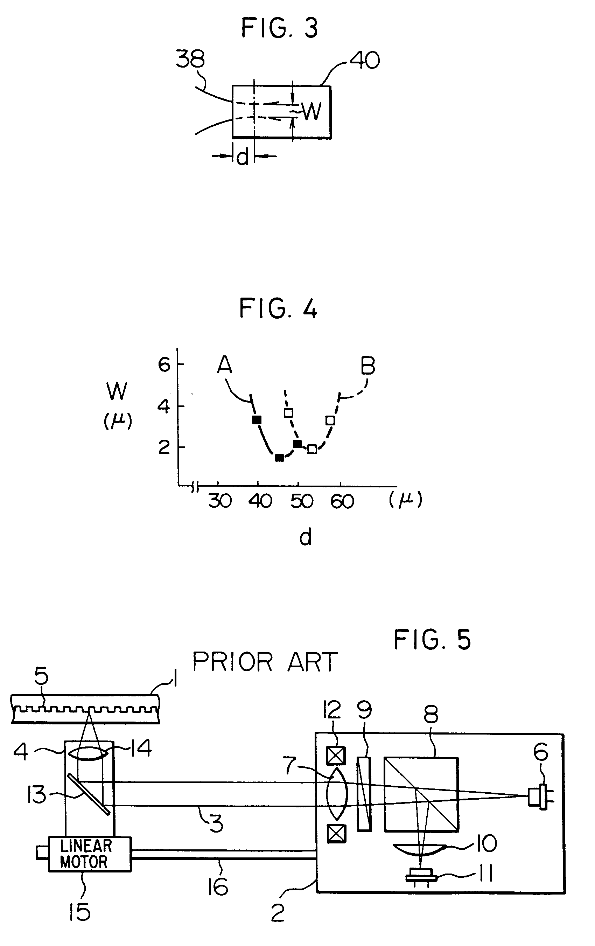

Fig. 5 shows the structure of this prior art optical head. Referring to Fig. 5, the optical head comprises a fixed optical part 2 for emitting a collimated laser beam 3 and a moving optical part 4 for condensing the collimated laser beam 3 on a track 5 of an optical disk 1 thereby recording and reproducing a signal on and from the track 5 of the optical disk 1. The fixed optical part 2 includes a laser 6, a collimation lens 7 which collimates a laser beam emitted from the laser 6, thereby providing the collimated laser beam 3, a polarized beam splitter 8 which, without returning the reflected laser beam from the optical disk 1 toward the laser 6, directs the reflected laser beam toward a photo detector 11 which detects the servo signal and the reproduced signal when it receives the reflected laser beam from the optical disk 1, a quarter wave plate 9, a cylindrical lens 10 for causing astigmatism, and an actuator 12 which actuates the collimation lens 7 for focusing and tracking purposes. The moving optical part 4 includes a total reflection mirror 13, an objective lens 14 which focuses the collimated laser beam 3 on the track 5 of the optical disk 1, and a linear motor 15. A guide rail 16 guides the moving optical part 4.

The operation of the prior art optical head having the structure described above will now be described with reference to Fig. 5. Referring to Fig. 5, the optical head is divided into the fixed optical part 2 and the moving optical part 4, and the moving optical part 4 is moved by the linear motor 15 along the guide rail 16 in the radial direction of the optical disk 1 under rotation. The laser beam emitted from the laser 6 is collimated by the collimation lens 7, and the collimated laser beam 3 is reflected by the total reflection mirror 13. The laser beam 3 reflected by the mirror 13 is focused by the objective lens 14 to be incident in substantially perpendicular relation on the track 5 of the optical disk 1. The reflected beam from the optical disk 1 is substantially totally reflected by the polarized beam splitter 8 by the function of the quarter wave plate 9, and the reflected beam from the beam splitter 8 passes through the cylindrical lens 10 to be incident on the photo detector 11. By utilizing the astigmatism caused by the cylindrical lens 10, the photo detector 11 detects a focusing error signal. The photo detector 11 also detects a tracking error signal by the far-field push-pull method. Even when out-of-focus of the objective lens 14 is caused by vertical runout of the optical disk 1, the objective lens 14 is placed in its just-focus position by actuating the collimation lens 7 by the actuator 12. Upon making intensity-modulation of the laser 6 at a recording power level thereof by using a data signal to be recorded, data is recorded on the corresponding track 5 of the optical disk 1.

However, in the prior art optical head operating in the manner described above, the actuator 12 is required to move the collimation lens 7 in the fixed optical part 2 by an amount almost equal to the amount of the vertical runout of the optical disk 1. Thus, the actuator 12 of a large size capable of producing large actuating power is required. Further, when the collimation lens 7 is actuated by such an actuator 12 to move over a large distance, the collimated beam 3 is caused to have a correspondingly large diverging or converging angle. In such a case, the collimated beam 3 incident on the objective lens 13 will not be a true parallel beam and may not be satisfactorily sharp focused, and, also the reflected beam from the optical disk 1 will be incident on the photo detector 11 at a deviated position. As a result, the prior art optical head has had the problem that the focusing error signal inevitably includes an offset which makes it difficult to assure satisfactory servo accuracy.

Further, in the prior art optical head, its moving optical part 4 is mounted on the guide rail 16 and guided along the rail 16 so as to seek the track 5. Therefore, when the factors including vertical runout of the optical disk 1 are taken into account, a relatively large working distance WD is required for the objective lens 14, and, because of such a requirement, the diameter of the objective lens 14 cannot be decreased. Thus, the prior art optical head has had such another problem that the use of the objective lens 14 having a large numerical aperture NA results inevitably. in a large size of the moving optical part 4.

Another prior art device is known from US-A-4003059 in which the objective lens for focussing the laser beam is mounted on a floating slider.

With a view to solving the prior art problems pointed out above, it is an aim of the present invention to provide an optical head which is small in size and light in weight, which includes an objective lens having a large numerical aperture NA and which is capable of high-density information recording and reproduction.

According to the present invention there is provided an optical head comprising:
fixed optical means including a source of a laser beam, collimating means for collimating the laser beam emitted from said laser beam source, beam splitting means for splitting a laser beam reflected from a recording and reproducing surface of an optical disk, and beam detecting means for receiving and detecting the reflected laser beam split by said beam splitting means ;
movable optical means including beam reflecting means for reflecting the laser beam collimated by said collimating means in a direction perpendicular to said recording and reproducing surface of said optical disk, and an objective lens for focusing the laser beam reflected from said beam reflecting means on said recording and reproducing surface of said optical disk;
feeding means for feeding said movable optical means in a radial direction of said optical disk; and
control means for controlling from outside of said movable optical means so that said objective lens is accurately focused on said recording and reproducing surface, while said optical disk is operating,
characterized in that the movable optical means includes a slider which carries said objective lens and said beam reflecting means mounted thereon so that, as said slider flies, said objective lens floats together with said beam reflecting means relatively to said recording and reproducing surface with a gaseous layer gap of about several µm at maximum intervening therebetween; and in that said control means is formed of means included in said laser beam source for changing a position of a beam emission point of said laser beam source, and said means for changing the position of the beam emission point of said laser beam source shifts the beam emission point along an optical axis of said laser beam source (37) so as to change an emission angle of the laser beam collimated by said collimating means, thereby making said objective lens be accurately focused on said recording and reproducing surface.

Specific embodiments of the present invention are now described, by way of example only, with reference to the accompanying drawings, in which:-

Fig. 1 is a diagrammatic view showing the structure of an embodiment of the optical recording and reproducing apparatus according to the present invention.

Fig. 2 shows one form of the laser beam source preferably used in the apparatus shown in Fig. 1.

Fig. 3 shows the relation between the beam waist position d and the width w of the laser beam emitted from the lens part of the laser beam source shown in Fig. 2.

Fig. 4 is a graph showing the results of measurement of the relation between the beam waist position d and the laser beam width w shown in Fig. 3.

Fig. 5 is a diagrammatic view showing the structure of an optical head used in a prior art optical recording and reproducing apparatus.

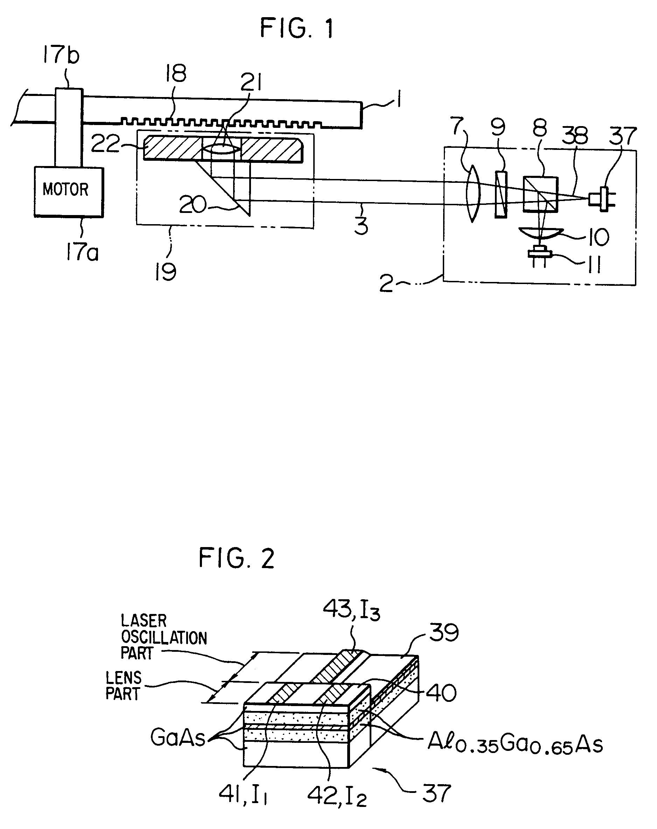

Fig. 1 shows the structure of an embodiment of the optical recording and reproducing apparatus according to the present invention.

Referring to Fig. 1, the information recording and reproducing apparatus includes a laser diode 37 of the type having a variable beam emission point and emitting a laser beam 38.

Fig. 2 shows one form of the laser diode 37 preferably used in the apparatus shown in Fig. 1. Referring to Fig. 2, the laser diode 37 includes a laser oscillation part 39, a lens part 40, and electrodes 41, 42 and 43.

A laser diode described in Extended Abstracts (The 35th Spring Meeting, 1988: The Japan Applied Physics and Related Societies) No. 3, p. 863, Lecture No. 29a-ZP-7, under the title "Beam Waist Position Variable Diode Laser Integrated With Carrier Injection Type Lens", can be used as this laser diode 37. Referring to Fig. 2, the laser oscillation part 39 of the laser diode 37 oscillates to emit the laser beam 38 when a current I₃ is injected from the electrode 43. When currents I₁ and I₂ are supplied to the respective electrodes 41 and 42 of the lens part 40 while the laser oscillation part 39 is oscillating, a change occurs in refractive index between the electrodes 41 and 42 of the lens part 40, thereby changing the position of the beam waist, that is, the emission point of the laser beam 38.

The operation of the optical recording and reproducing apparatus having the structure shown in Fig. 1 will now be described in detail.

The laser beam 38 emitted from the laser diode 37 is collimated by the collimation lens 7. After being reflected by the rectangular prism 20, the collimated laser beam 3 is focused substantially perpendicularly onto the recording and reproducing surface 18 of the optical disk 1 by the objective lens 21 mounted on the slider 22 and floating facing the recording and reproducing surface 18 of the optical disk 1. The reflected laser beam from the optical disk 1 is substantially subjected to total reflection by the polarized beam splitter 8 after passing through the quarter wave plate 9, and the reflected laser beam from the polarized beam splitter 8 is incident through the cylindrical lens 10 onto the photo detector 11. The photo detector 11 detects a focusing error signal by the astigmatic function of the cylindrical lens 10 and also detects a tracking error signal by the far-field push-pull method.

The flying height of the slider 22 differs between the positions facing the radially inner and outer peripheral portions of the rotating optical disk 1, with the result that the laser beam cannot be just focused on the recording and reproducing surface 18 of the optical disk 1. In order to correct the out-of-focus of the objective lens 21, the currents I₁ and I₂ generated on the basis of the focusing error signal detected by the photo detector 11 are respectively supplied to the electrodes 41 and 42 of the lens part 40 of the laser diode 37. As a result, the beam waist position of the laser beam 38 emitted from the laser diode 37 is shifted in the direction of the optical axis, thereby causing the wave front of the collimated laser beam 3 produced by the collimation lens 7 to diverge or converge, so that the collimated laser beam 3 can be just focused by the objective lens 21 onto the recording and reproducing surface 18 of the optical disk 1.

Fig. 3 shows the relation between the beam waist position d and the width w of the laser beam 38 at the lens part 40 of the laser diode 37. Fig. 4 is a graph showing the results of measurement of the beam waist position d and the beam width w shown in Fig. 3. Referring to Figs. 2, 3 and 4, the laser diode 37 is formed by integrating the lens part 40 with the laser oscillation part 39, and the beam waist position d of the emitted laser beam 38 varies as the values of the currents I₁ and I₂, which are made to flow into the lens part 40, are changed. For example, when the laser oscillation part 39 is made to oscillate by supplying the current I₃ = 370 mA to the electrode 43, and the values of the currents I₁ and I₂ supplied respectively to the electrodes 41 and 42 of the lens part 40 are changed from I₁ = I₂ = 20 mA, shown by the solid curve A, to I₁ = 130 mA and I₂ = 175 mA, shown by the broken curve B in Fig. 4, the beam waist position d is shifted from the distance of 45 µm to the distance of 55 µm, that is, the beam wasit position d is shifted inwardly (rightward) by about 10 µm, while the width w of the beam waist is maintained substantially constant.

The amount of out-of-focus that can be corrected by using the laser diode 37 shown in Fig. 2 is from 1 µm to 2 µm. This is because the amount of out-of-focus is expressed by a value obtained by dividing the shift distance of the beam emitting position by the longitudinal magnification (generally in the range from 5 to 10) of the focusing optical system formed by the combination of the collimation lens 7 and the objective lens 21. Thus, the amount of out-of-focus described above can be corrected by using the laser diode 37 shown in Fig. 2.

On the other hand, in the case of the prior art optical recording and reproducing apparatus shown in Fig. 5, the vertical runout of the optical disk 1 amounting to about several hundreds µm must be compensated. Therefore, the objective lens 14 cannot just focus the laser beam, because the emission point shift distance of only 1 µm to 2 µm, which is given by the laser diode 37 used in the present invention, is not sufficient for focusing the laser beam.

Thus, in accordance with the present invention, without the prior art requirement for provision of a mechanical actuator, the amount of out-of-focus is corrected by controlling the currents supplied to the lens part 40 of the laser diode 37, and the laser beam can be just focused by the objective lens 21 on the recording and reproducing surface 18 of the optical disk 1.

It will be seen from the above description of the embodiment of the optical recording and reproducing apparatus that the amount of out-of-focus of the objective lens 21 mounted on the slider 22 flying facing the recording and reproducing surface 18 of the optical disk 1 can be corrected by making variable the beam emission position of the laser beam source 37. Therefore, the optical head which does not include any moving elements and includes only a small number of parts and which is light in weight and small in size can be advantageously used in the optical recording and reproducing apparatus, so that the apparatus can operate with a short access time.

Further, because the optical head can be made very small in size and light in weight, an optical disk of a stacked structure formed by a plurality of stacked recording and reproducing surfaces similar to a magnetic disk of a stacked structure can be obtained, so that the memory capacity can be greatly increased.

In the aforementioned embodiments, reference has been made to the optical disk 1 having the recording and reproducing surface 18 formed by evaporating a recording medium on the surface of the disk substrate, by way of example. It is apparent however that an oxidization preventive layer or a protective layer for preventing a damage to the optical disk 1 due to collision with the slider 22 may additionally be formed on the recording medium.

Also, when the thickness of the disk substrate is suitably selected in consideration of the relation between the thickness precision or tilt of the disk substrate and the aberration of the numerical aperture NA of the objective lens, the present invention can also be applied to a conventional optical disk in which a signal is recorded and reproduced on and from a recording medium by directing a light beam from the side of the disk substrate.

Further, in the aforementioned embodiments, the fixed optical part 2 includes the beam splitter 8 and the quarter wave plate 9 disposed in the path of the laser beam from the laser 6 toward the collimation lens 7. However, the fixed optical part 2 may be constructed so that the collimation lens 7 is disposed immediately before the laser 6, and the collimated laser beam 3 is transmitted through the beam splitter 8 and the quarter wave plate 9.

The aforementioned embodiments have merely referred to a minimum number of necessary constitutional elements which are required for explaining the present invention. Therefore, it is apparent that any other known means such as servo means, modulation and demodulation signal processing means and an error correction circuit required for constituting an optical disk driver may be used as required.

## Claims

1. An optical head comprising:
fixed optical means (2) including a source (6, 37) of a laser beam, collimating means (7) for collimating the laser beam emitted from said laser beam source (6, 37), beam splitting means (8, 9) for splitting a laser beam reflected from a recording and reproducing surface (18) of an optical disk (1), and beam detecting means (11) for receiving and detecting the reflected laser beam split by said beam splitting means (8, 9);
movable optical means (19) including beam reflecting means (20) for reflecting the laser beam collimated by said collimating means (7) in a direction perpendicular to said recording and reproducing surface (18) of said optical disk (1), and an objective lens (21) for focusing the laser beam reflected from said beam reflecting means (20) on said recording and reproducing surface (18) of said optical disk (1);
feeding means (15) for feeding said movable optical means (19) in a radial direction of said optical disk (1); and
control means for controlling from outside of said movable optical means (19) so that said objective lens (21) is accurately focused on said recording and reproducing surface (18), while said optical disk (1) is operating,
characterized in that the movable optical means includes a slider (22) which carries said objective lens (21) and said beam reflecting means (20) mounted thereon so that, as said slider (22) flies, said objective lens (21) floats together with said beam reflecting means (20) relatively to said recording and reproducing surface (18) with a gaseous layer gap of about several µm at maximum intervening therebetween; and in that said control means is formed of means included in said laser beam source (37) for changing a position of a beam emission point of said laser beam source (37), and said means for changing the position of the beam emission point of said laser beam source (37) shifts the beam emission point along an optical axis of said laser beam source (37) so as to change an emission angle of the laser beam collimated by said collimating means (7), thereby making said objective lens (21) be accurately focused on said recording and reproducing surface (18).

2. An optical head according to claim 1, wherein said beam emission point position changing means is composed of a lens part (40) which is integrated with a laser oscillation part (39) to form a laser diode (37), and said lens part (40) acts to change a beam waist position (d) of the laser beam (38) emitted from said laser diode (37).

## Patentansprüche

1. Optischer Kopf mit:
einer festen optischen Einrichtung (2) mit einer Quelle (6, 37) eines Laserstrahls, einer Kollimationseinrichtung (7) zum Kollimieren des von der Laserstrahlquelle (6, 37) abgestrahlten Laserstrahls, einer Strahlteileinrichtung (8, 9) zum Teilen eines von einer Aufzeichnungs- und Wiedergabeoberfläche (18) einer optischen Scheibe (1) reflektierten Laserstrahls und einer Strahlerfassungseinrichtung (11) zum Empfangen und Erfassen des von der Strahlteileinrichtung (8, 9) geteilten reflektierten Laserstrahls;
einer beweglichen optischen Einrichtung (19) mit einer Stahlreflexionseinrichtung (20) zum Reflektieren des von der Kollimationseinrichtung (7) kollimierten Laserstrahls in eine zu der Aufzeichnungs- und Wiedergabeoberfläche (18) der optischen Scheibe (1) senkrechten Richtung und einer Objektivlinse (21) zum Fokussieren des von der Strahlreflexionseinrichtung (20) reflektierten Laserstrahls auf die Aufzeichnungs- und Wiedergabeoberfläche (18) der optischen Scheibe (1);
einer Verschiebeeinrichtung (15) zum Verschieben der beweglichen optischen Einrichtung (19) in einer radialen Richtung der optischen Scheibe (1); und
einer Steuereinrichtung zum derartigen Steuern von außerhalb, und zwar der beweglichen optischen Einrichtung (19), daß die Objektivlinse (21) genau auf die Aufzeichnungs- und Wiedergabeoberfläche (18) fokussiert ist, während die optischen Scheibe (1) in Betrieb ist,
dadurch gekennzeichnet, daß die bewegliche optische Einrichtung einen Schlitten (22) aufweist, welcher die Objektivlinse (21) und die Strahlreflexionseinrichtung (20) trägt, welche darauf so angebracht sind, daß bei der berührungslosen Bewegung des Schlittens (22) die Objektivlinse (21) zusammen mit der Strahlreflexionseinrichtung (20) relativ zu der Aufzeichnungs- und Wiedergabeoberfläche (18) mit einer dazwischen befindlichen Gaszwischenschicht von höchstens ungefähr einigen µm schwebt; und daß die Steuereinrichtung aus einer in der Laserstrahlquelle (37) inbegriffenen Einrichtung zum Verändern einer Position eines Abstrahlpunktes der Laserstrahlquelle (37) gebildet ist und die Einrichtung zum Verändern der Positionen des Abstrahlpunktes der Laserstrahlquelle (37) den Abstrahlpunkt entlang einer optischen Achse der Laserstrahlquelle (37) verschiebt, um einen Abstrahlwinkel des von der Kollimationseinrichtung (7) kollimierten Laserstrahls zu verändern, wodurch die Objektivlinse (21) genau auf die Aufzeichnungs- und Wiedergabeoberfläche (18) fokussiert wird.

2. Optischer Kopf nach Anspruch 1, bei dem die Abstrahlpunktpositionsveränderungseinrichtung zusammengesetzt ist aus einem Linsenteil (40), welcher mit einem Laseroszillationsteil (39) integriert ist, um eine Laserdiode (37) zu bilden, und der Linsenteil (40) zum Verändern einer Strahlbauchposition (d) des von der Laserdiode (37) abgestrahlten Laserstrahls (38) wirkt.

## Revendications

1. Tête optique comprenant
un moyen optique fixe (2) contenant une source (6, 37) d'un faisceau laser, un moyen collimateur (7) pour collimater le faisceau laser émis par ladite source de faisceau laser (6, 37), un moyen de division de faisceau (8, 9) pour diviser le faisceau laser réfléchi par la surface d'enregistrement, et de reproduction (18) d'un disque optique (1), et un moyen détecteur de faisceau (11) pour recevoir et détecter le faisceau laser réfléchi, divisé par ledit moyen de division de faisceau (8, 9);
un moyen optique mobile (19) contenant un moyen réflecteur de faisceau (20) pour réfléchir le faisceau laser collimaté par ledit moyen collimateur (7) dans une direction perpendiculaire à ladite surface d'enregistrement et de reproduction (18) dudit disque optique (1), et une lentille d'objectif (21) pour focaliser le faisceau laser réfléchi par ledit moyen réflecteur de faisceau (20) sur ladite surface d'enregistrement et de reproduction (18) dudit disque optique (1);
un moyen d'avancement (15) pour faire avancer ledit moyen optique mobile (19) dans la direction radiale dudit disque optique (1); et
un moyen de commande pour commander de l'extérieur le moyen optique mobile (19) de sorte que ladite lentille d'objectif (21) soit mise au point avec précision sur ladite surface d'enregistrement et de reproduction (18), tandis que ledit disque optique (1) est en fonctionnement;
caractérisé en ce que le moyen optique mobile (19) contient un bloc coulissant (22) qui porte ladite lentille d'objectif (21) et ledit moyen réflecteur de faisceau (20) montés sur lui de sorte que, quand ledit bloc coulissant (22) est mobile, ladite lentille d'objectif (21) est mobile en même temps que ledit moyen réflecteur de faisceau (20) par rapport à ladite surface d'enregistrement et de reproduction (18) avec un intervalle constitué par une couche gazeuse d'environ quelques µm au maximum interposée entre eux; et en ce que ledit moyen de commande est formé d'un moyen contenu dans ladite source de faisceau laser (37) pour modifier la position du point d'émission de faisceau de ladite source de faisceau laser (37), ledit moyen de modification de la position du point d'émission de faisceau de ladite source de faisceau laser (37) déplaçant le point d'émission de faisceau le long de l'axe optique de ladite source de faisceau laser (37) de manière à modifier l'angle d'émission du faisceau laser collimaté par ledit moyen collimateur (7), produisant ainsi la mise au point précise de ladite lentille d'objectif (21) sur ladite surface d'enregistrement et de reproduction (18).

2. Tête optique selon la revendication 1, dans laquelle ledit moyen de modification de position du point d'émission de faisceau est composé d'une partie lentille (40) qui est intégrée avec une partie oscillation de laser (39) pour former une diode laser (37), et ladite partie lentille (40) agit en modifiant la position (d) de rétrécissement du faisceau laser (38) émis par ladite diode laser (37).
